# EUROPÄISCHE PATENTSCHRIFT

(11) **EP 3 087 226 B1**
(45) Veröffentlichungstag und Bekanntmachung des Hinweises auf die Patenterteilung: **19.06.2019**
(21) Anmeldenummer: 16702026.2
(22) Anmeldetag: 26.01.2016
(51) Int. Cl.: E03C 1/02, B05B 1/30, E03C 1/084, F16K 31/00, G05D 7/01, B05B 12/08

(54) **SANITÄRE EINSETZEINHEIT**
SANITARY UNIT FOR WATER SUPPLY LINES
UNITÉ D'INSERTION SANITAIRE

(30) Priorität: 09.03.2015 DE 202015001885 U
(43) Veröffentlichungstag der Anmeldung: 02.11.2016
(73) Patentinhaber: Neoperl GmbH, 79379 Müllheim (DE)
(72) Erfinder: TWITCHETT, Simon, Hartlebury Kidderminster DY11 7xF (GB); STEIN, Alexander, 79241 Ihringen (DE)
(74) Vertreter: Börjes-Pestalozza, Henrich
(86) Internationale Anmeldenummer: PCT/EP2016/000134
(87) Internationale Veröffentlichungsnummer: WO 2016/142023

(56) Entgegenhaltungen:
- WO-A1-2004/083699
- WO-A1-2011/098253
- DE-C1- 10 228 490
- DE-U1-202011 100 800

## Beschreibung

Die Erfindung betrifft eine sanitäre Einsetzeinheit mit den Merkmalen des unabhängigen Anspruchs 1.

Aus der WO 2004/003673 A1 (= DE 10228490 C1) kennt man bereits eine als Durchflussmengenregler ausgebildete sanitäre Einsetzeinheit der eingangs erwähnten Art, die ein Reglergehäuse hat, das in einem Durchtrittskanal den Kern einer ersten Regler-Einheit aufweist, den ein ringförmiger Drosselkörper aus elastischem Material umgreift, welcher Drosselkörper zwischen sich und dem Kern oder dem Gehäuse-Außenumfang einen Steuerspalt begrenzt, dessen Durchtrittsquerschnitt durch den sich unter der beim Durchströmen bildenden Druckdifferenz verformenden Drosselkörper veränderbar ist. Um nun auch einen vergleichsweise großen Leitungsquerschnitt optimal nutzen zu können und um dafür einen präzise einregelnden Durchflussmengenregler zu schaffen, weist der vorbekannte Durchflussmengenregler im Bereich der ersten Regler-Einheit eine weitere zweite, vergleichbar aufgebaute Regler-Einheit auf. Der aus WO 2004/003673 A1 vorbekannte Durchflussmengenregler vermag zwar auch einen vergleichsweise großen Leitungsquerschnitt zu nutzen, um dort die Durchflussleistung auf einen festgelegten Maximalwert einzuregeln, - der vorbekannte Durchflussmengenregler kann aber bei vergleichsweise geringen Drücken weder einen zusätzlichen Wasserspareffekt erzielen, noch ist der vorbekannte Durchflussmengenregler geeignet, das Strahlbild des austretenden Wasserstrahls zu verbessern.

Aus der WO 2012/156002 A1 kennt man bereits eine sanitäre Einsetzeinheit, die einen Durchflussmengenregler hat. Auch der in der vorbekannten Einsetzeinheit vorgesehene Durchflussmengenregler weist einen elastischen Drosselkörper auf, der zwischen sich und einer Regelprofilierung einen sich unter dem Druck des durchströmenden Wassers veränderbaren Steuerspalt begrenzt. Da ein solcher elastischer Drosselkörper stets einen gewissen Wasserdruck benötigt, bevor er mit der die Durchflussleistung einregelnden Verformung beginnt, und da auch der elastische Drosselkörper bei niedrigen Wasserdrücken den Durchflussquerschnitt der Einsetzeinheit verengt, ist in dem Reglergehäuse der vorbekannten Einsetzeinheit auch ein Schließventil vorgesehen, dessen Ventilkörper von einer Offenstellung bei steigendem Wasserdruck gegen die Eigenelastizität des für den Ventilkörper verwendeten Materials zunehmend in eine Schließstellung bewegbar ist. Das zusätzliche Schließventil hat die Aufgabe, bei niedrigem Anschlussdruck einen zusätzlichen Flüssigkeitsdurchgang zu schaffen, der bei steigendem Druck ein rasches Ansteigen der Durchflussleistung bis zum angestrebten Maximalwert sicherstellt. Auch diese vorbekannte Einsetzeinheit vermag aber bei geringen Drücken nicht, die Strahlqualität des austretenden Wasserstrahls wesentlich zu verbessern.

Aus der EP 1 604 137 B1 ist ein Durchflussmen-genregler vorbekannt, der als ein in eine Gas- oder Flüssigkeitsleitung einsetzbares Einbauteil ausgebildet ist und ein Gehäuse hat, in dessen Gehäuse-Inneren zumindest ein Drossel- oder Regel-Körper angeordnet ist, der zwischen sich und einer Gehäusewand einen sich druckabhängig verändernden Regelspalt begrenzt, wobei das Gehäuse aus zumindest zwei Gehäuseteilen zusammengesetzt ist und wobei zwischen den einander zugewandten Seiten zweier benachbarter Gehäuseteile eine Gehäuseteiledichtung vorgesehen ist, die einstückig mit dem zumindest einen, im Gehäuse-Inneren gelagerten Drossel- oder Regel-Körper verbunden ist. Dabei ist bei einer Ausführungsform dieses vorbekannten Durchflussmengenreglers vorgesehen, dass das Einbauteil auch als Rückflussverhinderer ausgebildet ist und dass die Gehäuseteiledichtung dazu mit zumindest einem, im Gehäuse-Inneren beweglich angeordneten Schließkörper einstückig verbunden ist, welcher Schließkörper als eine innerhalb der Gehäusekammer vom Fördermedium bewegbare Ringmembrane ausgebildet ist.

Aus der EP 2 597 214 A ist eine sanitäre Einsetzeinheit vorbekannt, die ein zuströmseitiges Vorsatzsieb hat, welches an dem scheibenförmigen Reglergehäuse eines Durchflussmengenreglers lösbar gehalten ist, der seinerseits an seinem Scheibenumfang mit einem abströmseitig angeordneten belüfteten Strahlregler lösbar verbunden ist. Das scheibenförmige Reglergehäuse des Durchflussmengenreglers weist einen Ringkanal auf, der einen Kern umgreift und in dem ein ringförmiger Drosselkörper aus elastischem Material angeordnet ist, der zwischen sich und einer, an einer innenliegenden und/oder außenliegenden Kanalwandung vorgesehenen Regelprofilierung einen Steuerspalt begrenzt, dessen Durchtrittsquerschnitt durch den sich unter der beim Durchströmen bildenden Druckdifferenz verformenden Drosselkörper veränderbar ist. Der abströmseitig vorgesehene Strahlregler hat einen topfförmigen Diffusor, dessen Topfboden eine Prallfläche bildet, welche den vom Durchflussmengenregler kommenden Wasserstrom seitlich nach außen umlenkt, wo in einer Ringwandung des Diffusors Zerlegeröffnungen vorgesehen sind, die das Wasser zunächst in eine Vielzahl von Einzelstrahlen aufteilt, welche anschließend mit der in das Strahlreglergehäuse eingesaugten Umgebungsluft zu einem perl-weichen Auslaufstrahl vermischt werden. Bei der aus EP 2 597 214 A vorbekannten Einsetzeinheit ist der als Prallfläche dienende Topfboden etwa rechtwinklig zur Anströmrichtung des durch den Durchflussmengenregler strömenden Wassers angeordnet. Da das anströmende Wasser im rechten Winkel auf der Prallfläche auftrifft, kann es bereits bei geringen Drücken des durchströmenden Fluids zu unerwünscht starken Verwirbelungen im durchströmenden Wasser kommen.

Es besteht daher insbesondere die Aufgabe, eine sanitäre Einsetzeinheit der eingangs erwähnten Art zu schaffen, die bereits bei geringen Drücken des durchströmenden Fluids dessen Strahlqualität wesentlich zu verbessern vermag.

Die erfindungsgemäße Lösung dieser Aufgabe besteht bei der sanitären Einsetzeinheit der eingangs erwähnten Art insbesondere darin, dass am Topfboden des Strahlzerlegers ein zentraler Umlenkkonus vorgesehen ist, und dass zumindest ein innenliegender Ringkanal des Durchflussmengenreglers so ausgerichtet ist, dass zumindest eine Teilmenge des dort austretenden Wassers auf den Umlenkkonus auftrifft.

Die erfindungsgemäße Einsetzeinheit, die am Wasserauslauf einer sanitären Auslaufarmatur montierbar ist, weist einen Durchflussmengenregler auf, der ein Reglergehäuse hat, in dem eine erste außenliegende Regler-Einheit vorgesehen ist. Diese erste Regler-Einheit hat einen Ringkanal, der einen Kern umgreift und in dem ein ringförmiger Drosselkörper aus elastischem Material angeordnet ist. Der Drosselkörper begrenzt zwischen sich und einer, an einer innenliegenden und/oder außenliegenden Kanalwandung vorgesehenen Regelprofilierung einen Steuerspalt, dessen Durchtrittsquerschnitt durch den sich unter der beim Durchströmen bildenden Druckdifferenz verformenden Drosselkörper veränderbar ist. Mit steigendem Wasserdruck formt sich der elastische Drosselkörper in die ihm zugeordnete Regelprofilierung ein und verengt den Steuerspalt derart, dass der Durchflussmengenregler die pro Zeiteinheit durchströmende Wassermenge auf einen festgelegten Wert einregelt. Im Kern der ersten außenliegenden Regler-Einheit ist zumindest eine innenliegende Regler-Einheit vorgesehen, wobei jede innenliegende Regler-Einheit im Vergleich zur außenliegenden Regler-Einheit entsprechend ausgebildet ist und ebenfalls einen Ringkanal mit einem darin vorgesehenen ringförmigen Drosselkörper aus elastischem Material hat, welcher Drosselkörper zwischen sich und einer, an einer innenliegenden und/oder außenliegenden Kanalwandung vorgesehenen Regelprofilierung einen Steuerspalt begrenzt, dessen Durchtrittsquerschnitt durch den sich unter der beim Durchströmen bildenden Druckdifferenz verformenden Drosselkörper veränderbar ist. Das durch die erfindungsgemäße Einsetzeinheit durchströmende Wasser erfährt bereits in den Ringkanälen der ersten sowie der zumindest einen zweiten Regler-Einheit eine Geschwindigkeitserhöhung. Das hier mit vergleichsweise hoher Geschwindigkeit durchfließende Wasser strömt in Richtung zu einem Strahlregler der Einsetzeinheit, der in seinem Strahlreglergehäuse einen topfförmigen Strahlzerleger aufweist. Dabei bildet der Topfboden des Strahlzerlegers eine Prallfläche, die das von den Regler-Einheiten kommende Wasser quer zur Strahlregler-Längsachse nach außen hin zu Durchtrittsöffnungen in der Umfangswandung des topfförmigen Strahlzerlegers umlenkt. Dabei ist am Topfboden des Strahlzerlegers erfindungsgemäß ein zentraler Umlenkkonus vorgesehen, und zumindest ein innenliegender Ringkanal des Durchflussmengenreglers ist so ausgerichtet, dass zumindest eine Teilmenge des dort austretenden Wassers auf den Umlenkkonus auftrifft. Das mit hoher Geschwindigkeit auf die Prallfläche und dort insbesondere auf den zentralen Umlenkkonus anströmende Wasser wird dort abgebremst, umgelenkt und quer zur Strahlregler-Längsachse nach außen hin zu Durchtrittsöffnungen geführt, die in der Umfangswandung des topfförmigen Strahlzerlegers angeordnet sind. Sofern das durch die Durchtrittsöffnungen durchfließende Wasser nicht anschließend als eine aus Wasser gebildete Ringwand weiterfließt, kann in diesen Durchtrittsöffnungen das Wasser auch in Einzelstrahlen aufgeteilt werden, welche die Durchtrittsöffnungen mit erneut erhöhter Geschwindigkeit durchströmen. Gemäß der Bernoullischen Gleichung entsteht mit jeder Geschwindigkeitserhöhung, die durch einen Ringkanal, eine Durchtrittsöffnung oder dergleichen Querschnittsverengung verursacht wird, auf der Abströmseite ein Unterdruck. Da das die erfindungsgemäße Einsetzeinheit durchströmende Wasser mehrfach eine solche Geschwindigkeitserhöhung erfährt, entsteht in der erfindungsgemäßen Einsetzeinheit bereits bei geringen Wasserdrücken ein vergleichsweise hoher nutzbarer Unterdruck. Da die in den Ringkanälen der Regler-Einheiten vorgesehenen Drosselkörper im Vergleich zu einer einzigen, größer dimensionierten Regler-Einheit schon bei niedrigen Drücken ansprechen und sich verformen, wird ein störender Peak im Kurvenverlauf der Durchflussleistung vermieden, wie er demgegenüber bei größeren Durchflussmengenreglern mit einem entsprechend breiten Ringkanal üblich ist. Die erfindungsgemäße Einsetzeinheit zeichnet sich daher dadurch aus, dass sie bereits bei geringen Drücken des durchströmenden Fluids die Strahlqualität des aus dem Strahlregler austretenden Wasserstrahls wesentlich zu verbessern vermag.

Um den bereits bei geringen Drücken erzeugten Unterdruck in der erfindungsgemäßen Einsetzeinheit vorteilhaft nutzen zu können, sieht eine bevorzugte Weiterbildung gemäß der Erfindung vor, dass der Strahlregler der erfindungsgemäßen Einsetzeinheit als belüfteter Strahlregler ausgebildet ist.

Eine bevorzugte Ausführungsform gemäß der Erfindung sieht dazu vor, dass der Strahlregler in der Gehäuseumfangswandung seines Strahlreglergehäuses zumindest eine Belüftungsöffnung hat, die vorzugsweise in Strömungsrichtung unterhalb der Durchtrittsöffnungen des Strahlzerlegers im Gehäuseinneren des Strahlreglergehäuses mündet. Durch diese Belüftungsöffnung kann der auf der Abströmseite des Strahlzerlegers gebildete Unterdruck Umgebungsluft in das Gehäuseinnere des Strahlreglergehäuses einsaugen, die dort mit dem die Einsetzeinheit durchströmenden Wasser vermischt wird, so dass ein homogener, nicht-spritzender und perlend-weicher Wasserstrahl entsteht.

Eine bevorzugte Weiterbildung gemäß der Erfindung sieht vor, dass zwischen der Außenumfangswandung des Strahlzerlegers und dem benachbarten Gehäuseinnenumfang des Strahlreglergehäuses im Bereich der abströmseitigen Mündungen der Durchtrittsöffnungen eine Ringzone angeordnet ist, die sich in Durchströmrichtung zunehmend verjüngt. In dieser, sich in Durchströmrichtung verjüngenden Ringzone erfährt das entweder in Einzelstrahlen oder auch in einem ringförmigen Strahl durchströmende Fluid eine weitere Geschwindigkeitserhöhung, die unterhalb dieser Ringzone einen Unterdruck erzeugt, mit dessen Hilfe Umgebungsluft in das Gehäuseinnere des Strahlreglergehäuses eingesaugt werden kann. Unterhalb dieser Ringzone entsteht somit im Gehäuseinneren eine Mischzone, in der das Wasser und die eintretende Umgebungsluft gut durchmischt werden können.

Damit in dieser Mischzone die Umgebungsluft ungehindert eingeleitet werden kann, sieht eine bevorzugte Ausführungsform gemäß der Erfindung vor, dass im Bereich der Ringzone und insbesondere in Strömungsrichtung des den Strahlregler durchströmenden Fluids unterhalb der Ringzone die zumindest eine Belüftungsöffnung in der Gehäusewandung des Strahlreglergehäuses vorgesehen ist.

Der topfförmige Strahlzerleger im Strahlregler der erfindungsgemäßen Einsetzeinheit weist eine zentrale Prallfläche auf, an der das von den Regler-Einheiten kommende Wasser abgebremst und umgelenkt wird. Um ein Abbremsen des auf der Prallfläche auftreffenden Wassers noch zusätzlich zu begünstigen, sieht eine bevorzugte Weiterbildung gemäß der Erfindung vor, dass in Strömungsrichtung vor zumindest einer der Durchtrittsöffnungen ein Strömungshindernis vorgesehen ist.

Dabei ist es zweckmäßig, wenn das zumindest eine Strömungshindernis stiftförmig ausgestaltet ist und innenseitig am Topfboden des Strahlzerlegers entgegen der Durchströmrichtung vorsteht.

Dabei wird eine Ausführungsform bevorzugt, bei der die Strömungshindernisse so angeordnet sind, dass zumindest eine Teilmenge des vom Durchflussmengenregler kommenden Wassers und insbesondere die von der außenliegenden Regler-Einheit kommende Wassermenge nach Erreichen der maximalen Durchflussleistung zwischen den Strömungshindernissen auf den Topfboden des Strahlzerlegers auftrifft. Auf diese Weise wird erreicht, dass das insbesondere bei Erreichen des Maximalwerts der Durchflussleistung mit besonders hoher Geschwindigkeit anströmende Wasser an der Prallfläche des Topfbodens des Strahlzerlegers und an den dort angeordneten Strömungshindernissen gut abgebremst werden kann.

Eine besonders stabile Ausführungsform der erfindungsgemäßen Einsetzeinheit, die auch hohen Wasserdrücken standhält, sieht vor, dass über den zentralen Umlenkkonus ein zentraler Haltestift vorsteht, an dem sich der Durchflussmengenregler vorzugsweise etwa mittig abstützt.

Eine besonders kompakte und platzsparende Ausführungsform, die sich leicht in ein am Wasserauslauf einer Auslaufarmatur montierbares Auslaufmundstück einsetzen lässt, sieht vor, dass das Reglergehäuse auf einem Ringabsatz des Strahlreglergehäuses abgestützt ist.

Eine besonders vorteilhafte und leicht herstellbare Ausführungsform gemäß der Erfindung sieht vor, dass das Strahlreglergehäuse zweiteilig ausgestaltet ist und dass die in einem abströmseitigen Gehäuseteil vorgesehenen Belüftungsöffnungen bis unterhalb der Trennebene zwischen den Gehäuseteilen reichen.

Um das die erfindungsgemäße Einsetzeinheit durchströmende Wasser auslaufseitig wieder zu einem homogenen und nicht-spritzenden Wasserstrahl zu formen, ist es vorteilhaft, wenn an der auslaufseitigen Stirnfläche des abströmseitigen Gehäuseteiles eine Gitter- oder Netzstruktur vorgesehen ist, die durch sich an Kreuzungsknoten kreuzende und zwischen sich Auslauföffnungen umgrenzende Stege gebildet ist. Dabei kann an der auslaufseitigen Stirnfläche auch eine ungeordnete Gitterstruktur oder eine solche Gitterstruktur vorgesehen sein, bei der die einander kreuzenden Stege wabenzellenförmige Auslauföffnungen zwischen sich umgrenzen.

Die einfache Konstruktion und Herstellung der erfindungsgemäßen Einsetzeinheit wird noch zusätzlich begünstigt, wenn die Gitter- oder Netzstruktur einstückig an das abströmseitige Gehäuseteil angeformt ist.

In der ersten Regler-Einheit und der zumindest einen zweiten Regler-Einheit kann jeweils ein elastischer Drosselkörper vorgesehen sein. Möglich ist aber auch, dass der Drosselkörper der ersten Regler-Einheit und der Drosselkörper zumindest der benachbarten zweiten Regler-Einheit zu einer Drosselkörper-Einheit vorzugsweise einstückig miteinander verbunden sind. Bei dieser besonders vorteilhaften Ausführungsform ist zumindest zwei benachbarten Regler-Einheiten eine gemeinsame Drosselkörper-Einheit zugeordnet, wobei die in den Ringnuten dieser Regler-Einheiten befindlichen Drosselkörper miteinander zu einer einzigen Drosselkörper-Einheit verbunden sind.

Die erste äußere Regler-Einheit einerseits und die zumindest eine innenliegende zweite Regler-Einheit andererseits können mit einer mehr oder weniger großen Exzentrizität zueinander angeordnet sein. Eine bevorzugte und besonders platzsparend auszugestaltende Ausführungsform gemäß der Erfindung sieht jedoch vor, dass die Ringnut der ersten Regler-Einheit und die der benachbarten zweiten Regler-Einheit konzentrisch zueinander angeordnet sind.

Eine besonders vorteilhafte Weiterbildung gemäß der Erfindung, bei der die den benachbarten Regler-Einheiten zugeordneten Drosselkörper auf besonders einfache Weise herstellbar sind, sieht vor, dass die Drosselkörper-Einheit einen etwa W-förmigen, Y-förmigen oder gabelförmigen Ringquerschnitt aufweist, und dass zwei freie Stegenden dieser Ringform die ringförmigen Drosselkörper der beiden benachbarten Regler-Einheiten bilden.

Damit die durch zwei freie Stegenden der im Ringquerschnitt W-förmigen, Y-förmigen oder gabelförmigen Drosselkörper-Einheit auf einfache Weise, gegebenenfalls auch in einem automatisierten Herstellungsprozess, konzentrisch in den Ringnuten der benachbarten Regler-Einheiten angeordnet werden können, ist es vorteilhaft, wenn die Ringnut der ersten Regler-Einheit und die Ringnut der benachbarten zweiten Regler-Einheit durch eine umlaufende Ringwand oder durch eine Ringnut voneinander getrennt sind.

Bei einer Ausführungsform, bei der die Ringnuten der benachbarten Regler-Einheiten durch eine dazwischenliegende Ringwand voneinander getrennt sind, ist es vorteilhaft, wenn die an der zuströmseitigen Stirnfläche des Reglergehäuses vorstehende Ringwand in die zentrale Ausnehmung des W-förmigen Ringquerschnitts der Drosselkörper-Einheit vorsteht.

Bei einer Ausführungsform, bei der demgegenüber zwischen den Ringnuten der benachbarten Regler-Einheiten eine weitere Ringnut vorgesehen ist, ist es zweckmäßig, wenn in der an der zuströmseitigen Stirnfläche des Reglergehäuses vorgesehenen und zwischen den Ringnuten der benachbarten Regler-Einheiten angeordneten Ringnut der untere Längssteg der Y- oder der Gabelform der Drosselkörper-Einheit gehalten ist.

Um die Regelcharakteristik der in einem Durchflussmengenregler-Einheiten vorgesehenen Durchflussmengenregler aufeinander abzustimmen und beispielsweise so auszugestalten, dass die eine Durchflussmengenregler-Einheit vor allem im unteren Druckbereich einregelt, während demgegenüber die andere Durchflussmengenregler-Einheit eher im oberen Druckbereich einzuregeln hat, kann es vorteilhaft sein, wenn zumindest zwei freie Stegenden dieser W-, Y- oder gabelförmigen Drosselkörper-Einheit sich in ihrer materialbedingten und/oder formbedingten Elastizität voneinander unterscheiden.

Weiterbildungen gemäß der Erfindung ergeben sich aus der nachfolgenden Beschreibung in Verbindung mit den Ansprüchen sowie der Zeichnung. Nachstehend wird die Erfindung anhand eines bevorzugten Ausführungsbeispiels noch näher beschrieben.

Es zeigt:
- Fig. 1: eine in einem Längsschnitt dargestellte sanitäre Einsetzeinheit, die mit Hilfe eines Auslaufmundstücks am Wasserauslauf einer sanitären Wasserauslaufarmatur montierbar ist, wobei die Einsetzeinheit ein zuströmseitiges Vorsatz- oder Filtersieb, einen abströmseitigen Strahlregler und einen zwischen Vorsatzsieb und Strahlregler angeordneten Durchflussmengenregler mit zwei, vorzugsweise konzentrischen Regler-Einheiten aufweist,
- Fig. 2: die sanitäre Einsetzeinheit aus Figur 1 in einem perspektivisch dargestellten Längsschnitt mit Sicht auf die Zuströmseite dieser Einsetzeinheit,
- Fig. 3: die Einsetzeinheit aus den Figuren 1 und 2 in einer auseinandergezogenen perspektivischen Darstellung ihrer Bestandteile,
- Fig. 4: die vom Durchflussmengenregler der in den Figuren 1 bis 3 gezeigten Einsetzeinheit eingeregelte Durchflussleistung in Abhängigkeit vom Druck des anströmenden Wassers,
- Fig. 5: einen in perspektivischer Draufsicht auf die Zuströmseite dargestellten und zum Einsatz in der sanitären Einsetzeinheit bestimmten Durchflussmengenregler, der gegenüber dem in den Figuren 1 bis 4 verwendeten Durchflussmengenregler zwar ebenfalls zwei, vorzugsweise konzentrische Regler-Einheiten hat, der aber demgegenüber abweichend ausgebildet ist und hier eine gemeinsame, im Ringlängsschnitt etwa W-förmige Drosselkörper-Einheit hat, wobei die freien Stegenden dieser W-Form die Drosselkörper der beiden ReglerEinheiten bilden,
- Fig. 6: den Durchflussmengenregler aus Figur 5 in einem perspektivischen Längsschnitt,
- Fig. 7: den Durchflussmengenregler aus den Figuren 5 und 6 in einer längsgeschnittenen Seitenansicht und
- Fig. 8: den Durchflussmengenregler aus den Figuren 5 bis 7 in einer auseinandergezogenen Darstellung von Reglergehäuse und dazugehöriger Drosselkörper-Einheit.

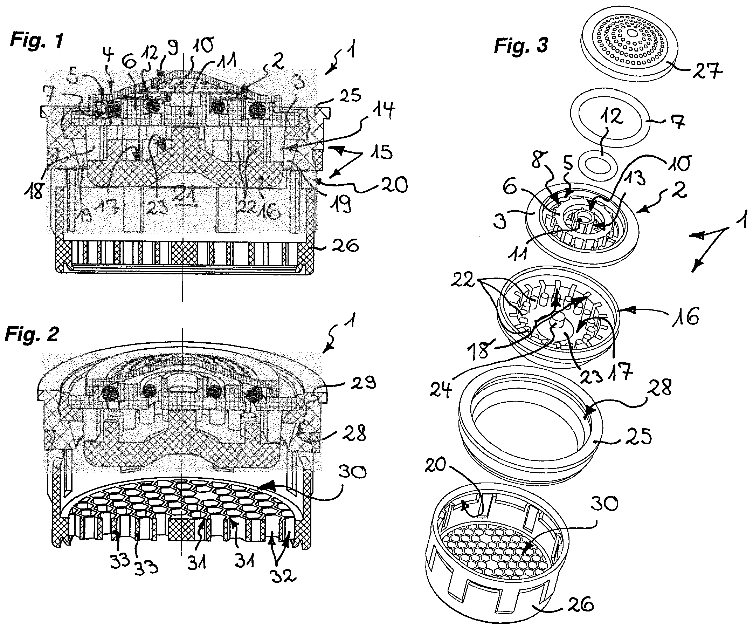

In den Figuren 1 bis 3 ist eine sanitäre Einsetzeinheit 1 dargestellt, die an dem Wasserauslauf einer hier nicht weiter gezeigten sanitären Auslaufarmatur montierbar ist. Die Einsetzeinheit 1 weist einen Durchflussmengenregler 2 auf, der ein Reglergehäuse 3 hat, in dem eine erste Regler-Einheit 4 vorgesehen ist. Diese außenliegende oder äußere erste Regler-Einheit 4 hat einen ersten Ringkanal 5, der einen Kern 6 umgreift und in dem ein ringförmiger Drosselkörper 7 aus elastischem Material angeordnet ist. Der Drosselkörper 7 begrenzt zwischen sich und einer, an einer innenliegenden und/oder außenliegenden Kanalwandung des ersten Ringkanals 5 vorgesehenen Regelprofilierung 8 einen Steuerspalt, dessen Durchtrittsquerschnitt durch den sich unter der beim Durchströmen bildenden Druckdifferenz verformenden Drosselkörper 7 veränderbar ist. Mit steigendem Wasserdruck formt sich der elastische Drosselkörper 7 in die ihm zugeordnete Regelprofilierung 8 ein und verengt den Steuerspalt derart, dass der Durchflussmengenregler 2 die pro Zeiteinheit durchströmende Wassermenge auf einen festgelegten Wert einregelt. Im Kern 6 der außenliegenden Regler-Einheit 4 ist zumindest eine innenliegende zweite Regler-Einheit 9 vorgesehen, wobei diese innenliegende zweite Regler-Einheit 9 im Vergleich zur außenliegenden ersten Regler-Einheit 4 entsprechend ausgebildet ist. Auch die innenliegende zweite Regler-Einheit 9 hat einen Ringkanal 10 (der zweite Ringkanal), der einen Kern 11 umgreift und in dem ein ringförmiger Drosselkörper 12 aus elastischem Material angeordnet ist. Auch der Drosselkörper 12 der innenliegenden zweiten Regler-Einheit 9 begrenzt zwischen sich und einer, an einer innenliegenden und/oder außenliegenden Kanalwandung des zweiten Ringkanals 10 vorgesehenen Regelprofilierung 13 einen Steuerspalt, dessen Durchtrittsquerschnitt durch den sich unter der beim Durchströmen bildenden Druckdifferenz verformenden Drosselkörper 12 veränderbar ist.

Das durch die Einsetzeinheit 1 durchströmende Wasser erfährt bereits in den Ringkanälen 5, 10 der Regler-Einheiten 4, 9 eine Geschwindigkeitserhöhung. Dieses mit hoher Geschwindigkeit durchfließende Wasser strömt in Richtung zu einem Strahlregler 14 der Einsetzeinheit 1, der in seinem Strahlreglergehäuse 15 einen topfförmigen Strahlzerleger 16 aufweist. Dabei bildet der Topfboden des Strahlzerlegers 16 eine Prallfläche 17, die das von den Regler-Einheiten 4, 9 kommende Wasser quer zur Strahlregler-Längsachse nach außen hin zu den Durchtrittsöffnungen 18 in der Umfangswandung des topfförmigen Strahlzerlegers 16 umlenkt. Das mit hoher Geschwindigkeit auf die Prallfläche 17 anströmende Wasser wird dort abgebremst, umgelenkt und quer zur Strahlregler-Längsachse nach außen hin zu den Durchtrittsöffnungen 18 umgelenkt, die in der Umfangswandung des topfförmigen Strahlzerlegers 16 angeordnet sind. In diesen Durchtrittsöffnungen 18 kann das Wasser gegebenenfalls auch in Einzelstrahlen aufgeteilt werden, wobei entweder diese Einzelstrahlen oder stattdessen eine aus dem durchströmenden Wasser gebildete Ringwand die Durchtrittsöffnungen 18 mit erneut erhöhter Geschwindigkeit durchströmen. Gemäß der Bernoullischen Gleichung entsteht mit jeder Geschwindigkeitserhöhung, die durch die Ringkanäle 5, 10 der Regler-Einheiten 4, 9, die Durchtrittsöffnungen 18 im Strahlzerleger 16 oder dergleichen Querschnittsverengungen bewirkt wird, auf der Abströmseite ein Unterdruck. Da das die Einsetzeinheit 1 durchströmende Wasser nun mehrfach eine solche Geschwindigkeitserhöhung erfährt, entsteht in der Einsetzeinheit 1 bereits bei geringen Wasserdrücken ein vergleichsweise hoher nutzbarer Unterdruck. Da die in den Ringkanälen 5, 10 der Regler-Einheiten 4, 9 vorgesehenen Drosselkörper 7, 12 im Vergleich zu einer einzigen größer dimensionierten Regler-Einheit schon bei niedrigen Drücken ansprechen und sich verformen, wird ein störender Peak im Kurvenverlauf der Durchflussleistung vermieden, wie er demgegenüber bei größeren Durchflussmengenreglern mit nur einem entsprechend breiten Ringkanal üblich ist.

Der Strahlregler 14 der Einsetzeinheit 1 ist als belüfteter Strahlregler ausgebildet. Der Strahlregler 14 weist zwischen der Außenumfangswandung des Strahlzerlegers 16 und dem benachbarten Gehäuseinnenumfang seines Strahlreglergehäuses 15 im Bereich der abströmseitigen Mündungen der Durchtrittsöffnungen 18 eine Ringzone 19 auf, die sich in Durchströmrichtung zunehmend verjüngt. Im Bereich dieser Ringzone 19 erfährt das durch die Ringzone 19 entweder in Einzelstrahlen oder in einer Ringwand durchströmende Wasser erneut eine Geschwindigkeitserhöhung, die auf der Abströmseite der Ringzone 19 zu einem Unterdruck führt. In Strömungsrichtung des den Strahlregler 14 durchströmenden Fluids ist unterhalb der Ringzone 19 zumindest eine Belüftungsöffnung 20 in der Gehäusewandung des Strahlreglergehäuses 15 vorgesehen. Mit Hilfe des durch die mehrfachen Geschwindigkeitserhöhungen des durchfließenden Wassers schon bei niedrigeren Drücken entstehenden Unterdrucks kann Umgebungsluft durch die Belüftungsöffnungen 20 hindurch in das Gehäuseinnere des Strahlreglergehäuses 15 eingesaugt werden, die in einer unterhalb des Strahlzerlegers 16 angeordneten Mischzone 21 im Strahlreglergehäuse 15 mit dem durchströmenden Wasser vermischt wird.

Damit das bereits von den Regler-Einheiten 4, 9 mit hoher Geschwindigkeit anströmende Wasser vom Anwender nicht als harter Wasserstrahl empfunden wird, wird das vom Durchflussmengenregler 2 anströmende Wasser bereits an der Prallfläche 17 des Strahlzerlegers 16 abgebremst und umgelenkt. Um eine zusätzliche Abbremsung des die Prallfläche anströmenden Wassers zu erzielen, ist in Strömungsrichtung vor den Durchtrittsöffnungen 18 zumindest ein Strömungshindernis 22 vorgesehen. Die hier kreisförmig und in gleichmäßigen Abständen zueinander angeordneten Strömungshindernisse 22 sind stiftförmig ausgestaltet und stehen innenseitig am Topfboden des Strahlzerlegers 16 vor. Dabei sind diese stiftförmigen Strömungshindernisse 22 so angeordnet, dass die von der außenliegenden Regler-Einheit 4 kommende Wassermenge nach Erreichen der maximalen Durchflussleistung dieser Regler-Einheit: 4 zwischen den Strömungshindernissen 22 auf dem als Prallfläche 17 dienenden Topfboden des Strahlzerlegers 16 auftrifft.

In den Längsschnitten gemäß den Figuren 1 und 2 ist gut zu erkennen, dass an dem die Prallfläche 17 bildenden Topfboden des Strahlzerlegers 16 ein zentraler Umlenkkonus 23 vorgesehen ist. Dabei ist der das Reglergehäuse 3 durchsetzende zweite Ringkanal 10 der zumindest einen zweiten Regler-Einheit 9 so ausgerichtet, dass das dort austretende Wasser auf den Umlenkkonus 23 auftrifft, bevor es von dort ebenfalls zu den Durchtrittsöffnungen 18 umgelenkt wird. Über den zentralen Umlenkkonus 23 steht ein zentraler Haltestift 24 vor, an dem sich der Durchflussmengenregler 2 etwa mittig abstützt.

In den Figuren 1 bis 3 ist erkennbar, dass das Strahlreglergehäuse 15 zweiteilig ausgebildet ist und ein zuströmseitiges Gehäuseteil 25 sowie ein abströmseitiges Gehäuseteil 26 aufweist. Dabei reichen die im abströmseitigen Gehäuseteil 26 vorgesehenen Belüftungsöffnungen 20 bis unterhalb der Trennebene zwischen den Gehäuseteilen 25 und 26.

Die Einsetzeinheit 1 hat ein hier konusförmig ausgebildetes Vorsatz- oder Filtersieb 27, zwischen dem und dem Strahlregler 15 der Durchflussmengenregler 2 angeordnet ist. Das Reglergehäuse 3 des Durchflussmengenreglers 2 stützt sich auf einem Ringabsatz 28 am zuströmseitigen Gehäuseteil 25 des Strahlreglergehäuses 15 ab. Dabei ist das Reglergehäuse 3 in einen, im Querschnitt etwa L-förmigen Abschnitt des Strahlzerlegers 16 eingelegt, bei dem der Quersteg dieser L-Form radial nach innen abgewinkelt ist. Das Reglergehäuse 3 ist in dem Strahlzerleger 16 vorzugsweise lösbar und insbesondere lösbar verrastbar gehalten. Der auf dem Ringabsatz 28 aufliegende Strahlzerleger 16 ist seinerseits am Innenumfang des zuströmseitigen Gehäuseteiles 25 vorzugsweise lösbar und insbesondere lösbar verrastbar montiert. Auch die das Strahlreglergehäuse 15 bildenden Gehäuseteile 25 und 26 sind lösbar und insbesondere lösbar verrastbar ineinander gefügt.

An der auslaufseitigen Stirnfläche des abströmseitigen Gehäuseteiles 26 ist eine Gitter- oder Netzstruktur 30 vorgesehen, die durch sich an Kreuzungsknoten 31 kreuzende und zwischen sich Auslauföffnungen 32 umgrenzende Stege 33 gebildet ist. Diese Gitter- oder Netzstruktur 30, welche die Bildung eines homogenen, nicht-spritzenden und perlend-weichen Wasserstrahls in der hier dargestellten Einsetzeinheit 1 begünstigen soll, ist einstückig an das Gehäuseteil 26 angeformt.

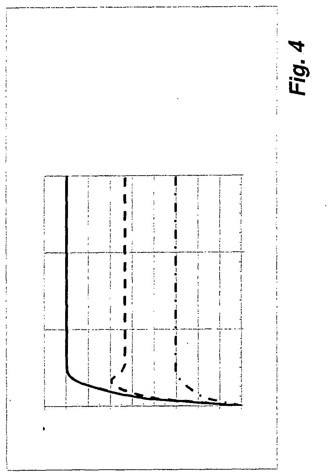

In Figur 4 ist die vom Durchflussmengenregler 2 der Einsetzeinheit 1 eingeregelte Durchflussleistung in Abhängigkeit vom Druck des anströmenden Wassers dargestellt. Dabei zeigt die durchgezogene Linie die Durchflussleistung des aus den Regler-Einheiten 4, 9 bestehenden Durchflussmengenreglers 2, die der Durchflussleistung der innenliegenden zweiten Regler-Einheit 9 auf der untenliegenden strich-punktierten Linie und der Durchflussleistung der außenliegenden ersten Regler-Einheit 4 auf der dazwischenliegenden gestrichelten Linie gegenübergestellt ist. Aus Figur 4 wird deutlich, dass die Durchflussleistung der vergleichsweise großen außenliegenden ersten Regler-Einheit 4 in einem bestimmten Druckbereich, in welchem der Drosselkörper sich beginnt zu verformen, den angestrebten Maximalwert in einem sogenannten "Peak" auch übersteigen kann. Demgegenüber zeichnet sich der in der Einsetzeinheit 1 verwendete und aus der. außenliegenden ersten Regler-Einheit 4 sowie der zumindest einen innenliegenden zweiten Regler-Einheit 9 bestehende Durchflussmengenregler 2 durch einen raschen Anstieg der Durchflussleistung aus, wobei ein unerwünschtes Überschreiten des festgelegten Maximalwerts der Durchflussleistung weitestgehend vermieden wird.

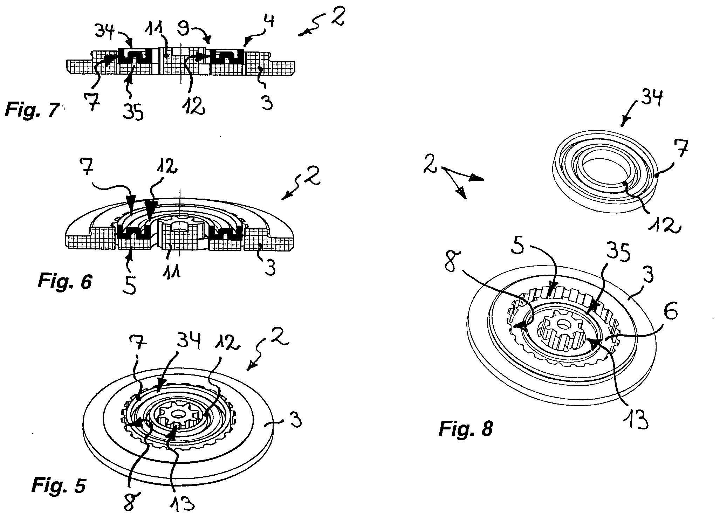

In den Figuren 5 bis 8 ist eine alternative Ausführungsform für einen Durchflussmengenregler 2 dargestellt, wie er in der sanitären Einsetzeinheit 1 gemäß den Figuren 1 bis 4 zum Einsatz kommen kann. Wie aus den Längsschnitten in den Figuren 6 und 7 erkennbar ist, sind der Drosselkörper 7 der äußeren ersten Regler-Einheit 4 und der Drosselkörper 12 der benachbarten zweiten Regler-Einheit 9 zu einer Drosselkörper-Einheit 34 vorzugsweise einstückig miteinander verbunden. Dabei weist diese Drosselkörper-Einheit 34 einen hier etwa W-förmigen Ringquerschnitt auf, wobei die freien Stegenden dieser Ringform die ringförmigen Drosselkörper 7, 12 bilden. Unter Ringquerschnitt sei hier eine etwa senkrecht zu der durch den Ringumfang verlaufenden Ebene angeordnete Schnittebene gemeint. Um die Regelcharakteristik der äußeren ersten Regler-Einheit 4 und der innenliegenden zweiten Regler-Einheit 9 aufeinander abzustimmen und beispielsweise so auszugestalten, dass die eine Durchflussmengenregler-Einheit vor allem im unteren Druckbereich einregelt, während demgegenüber die andere Durchflussmengenregler-Einheit im oberen Druckbereich einzuregeln hat, ist es möglich, dass die zumindest zwei freien Stegenden dieser im Ringquerschnitt etwa W-förmigen Drosselkörper-Einheit 34 sich in ihrer materialbedingten und/oder formbedingten Elastizität voneinander unterscheiden.

Da der erste Ringkanal 5 der äußeren ersten Regler-Einheit 4 und der zweite Ringkanal 10 der benachbarten zweiten Regler-Einheit 9 hier durch eine umlaufende Ringwand 35 voneinander getrennt sind, die an der zuströmseitigen Stirnfläche des Reglergehäuses 3 in die zentrale Ausnehmung des hier W-förmigen Ringquerschnitts der Drosselkörper-Einheit 34 vorsteht, und da diese Ringwand 35 in die zentrale Ausnehmung des W-förmigen Ringquerschnitts der Drosselkörper-Einheit 34 vorsteht, wird die lagegerechte Anordnung der Drosselkörper-Einheit 34 in den Ringkanälen 5, 10 sichergestellt. Aus einem Vergleich der Figuren 5 bis 8 ist erkennbar, dass der an der Drosselkörper-Einheit 34 lippenförmig vorstehende Drosselkörper 7 mit einer Regelprofilierung 8 zusammenwirkt, die an der außenseitigen Kanalwand des Ringkanals 15 vorgesehen ist, während demgegenüber der hier ebenfalls lippenförmig ausgebildete Drosselkörper 12 an der Drosselkörper-Einheit 34 mit einer Regelprofilierung 13 zusammenwirkt, die an der innenliegenden Kanalwand des zweiten Ringkanals 10 angeordnet ist. Da die Drosselkörper 7, 12 der Regler-Einheiten 4, 9 einstückig zu einer aus elastischem Material hergestellten Drosselkörper-Einheit 34 verbunden sind, wird die gegebenenfalls auch automatisierte Herstellung des für die Einsetzeinheit 1 benötigten Durchflussmengenreglers 2 wesentlich vereinfacht.

### Bezugszeichenliste

- 1: Einsetzeinheit
- 2: Durchflussmengenregler
- 3: Reglergehäuse
- 4: außenliegende erste Regler-Einheit
- 5: erster Ringkanal (der außenliegenden Regler-Einheit 4)
- 6: äußerer Kern (der außenliegenden Regler-Einheit 4)
- 7: Drosselkörper (der außenliegenden Regler-Einheit 4)
- 8: Regelprofilierung (der außenliegenden Regler-Einheit 4)
- 9: innenliegende zweite Regler-Einheit
- 10: zweiter Ringkanal (der innenliegenden Regler-Einheit 9)
- 11: innerer Kern (der innenliegenden Regler-Einheit 9)
- 12: Drosselkörper (der innenliegenden Regler-Einheit 9)
- 13: Regelprofilierung (der innenliegenden Regler-Einheit 9)
- 14: Strahlregler
- 15: Strahlreglergehäuse
- 16: Strahlzerleger
- 17: Prallfläche
- 18: Durchtrittsöffnungen
- 19: Ringzone
- 20: Belüftungsöffnungen
- 21: Mischzone
- 22: Strömungshindernisse
- 23: zentraler Umlenkkonus
- 24: zentraler Haltestift
- 25: zuströmseitiges Gehäuseteil
- 26: abströmseitiges Gehäuseteil
- 27: Vorsatz- oder Filtersieb
- 28: Ringabsatz
- 30: Gitterstruktur
- 31: Kreuzungsknoten
- 32: Auslauföffnungen
- 33: Stege
- 34: Drosselkörper-Einheit
- 35: Ringwand

## Patentansprüche

1. Sanitäre Einsetzeinheit (1) mit einem Durchflussmengenregler (2), der ein Reglergehäuse (3) aufweist, in dem eine erste Regler-Einheit (4) vorgesehen ist, die einen ersten Ringkanal (5) hat, der einen Kern (6) umgreift und in dem ein ringförmiger Drosselkörper (7) aus elastischem Material angeordnet ist, welcher Drosselkörper (7) zwischen sich und einer, an einer innenliegenden und/oder außenliegenden Kanalwandung des ersten Ringkanals (5) vorgesehenen Regelprofilierung (8) einen Steuerspalt begrenzt, dessen Durchtrittsquerschnitt durch den sich unter der beim Durchströmen bildenden Druckdifferenz verformenden Drosselkörper (7) veränderbar ist, wobei im Kern (6) der ersten Regler-Einheit (4) zumindest eine innenliegende zweite Regler-Einheit (9) vorgesehen ist, die einen zweiten Ringkanal (10) mit einem darin angeordneten ringförmigen Drosselkörper (12) aus elastischem Material hat, welcher Drosselkörper (12) zwischen sich und einer Regelprofilierung (13) des zweiten Ringkanals (10) einen Steuerspalt begrenzt, **dadurch gekennzeichnet, dass** die Einsetzeinheit (1) einen Strahlregler (14) hat, der in seinem Strahlreglergehäuse (15) einen topfförmigen Strahlzerleger (16) aufweist, dessen Topfboden eine Prallfläche (17) bildet, die das von den Reglereinheiten (4, 9) kommende Wasser quer zur Strahlregler-Längsachse nach außen hin zu Durchtrittsöffnungen (18) in der Umfangswandung des topfförmigen Strahlzerlegers (16) umlenkt, wobei am Topfboden des Strahlzerlegers (16) ein zentraler Umlenkkonus (23) vorgesehen ist, und der zumindest eine zweiteRingkanal (10) des Durchflussmengenreglers (2) so ausgerichtet ist, dass zumindest eine Teilmenge des dort austretenden Wassers auf den Umlenkkonus (23) auftrifft.

2. Sanitäre Einsetzeinheit nach Anspruch 1, **dadurch gekennzeichnet, dass** der Strahlregler (14) als belüfteter Strahlregler ausgebildet ist.

3. Sanitäre Einsetzeinheit nach Anspruch 2, **dadurch gekennzeichnet, dass** der Strahlregler (14) zumindest eine Belüftungsöffnung (20) hat, die das Strahlreglergehäuse (15) durchsetzt.

4. Sanitäre Einsetzeinheit nach einem der Ansprüche 1 bis 3, **dadurch gekennzeichnet, dass** zwischen der Außenumfangswandung des Strahlzerlegers (16) und dem benachbarten Gehäuseinnenumfang des Strahlreglergehäuses (15) im Bereich der abströmseitigen Mündungen der Durchtrittsöffnungen (18) eine Ringzone (19) vorgesehen ist, die sich in Durchströmrichtung zunehmend verjüngt.

5. Sanitäre Einsetzeinheit nach Anspruch 4, **dadurch gekennzeichnet, dass** im Bereich der Ringzone (19) und insbesondere in Strömungsrichtung des den Strahlregler (14) durchströmenden Fluids unterhalb der Ringzone (19) zumindest eine Belüftungsöffnung (20) in der Gehäusewandung des Strahlreglergehäuses (15) vorgesehen ist.

6. Sanitäre Einsetzeinheit nach einem der Ansprüche 1 bis 5, **dadurch gekennzeichnet, dass** in Strömungsrichtung vor zumindest einer der Durchtrittsöffnungen (18) ein Strömungshindernis (22) vorgesehen ist.

7. Sanitäre Einsetzeinheit nach Anspruch 6, **dadurch gekennzeichnet, dass** zumindest ein Strömungshindernis (22) innenseitig am Topfboden des Strahlzerlegers (16) entgegen der Durchströmrichtung vorsteht.

8. Sanitäre Einsetzeinheit nach Anspruch 6 oder 7, **dadurch gekennzeichnet, dass** die Strömungshindernisse (22) so angeordnet sind, dass zumindest eine Teilmenge des vom Durchflussmengenregler (2) kommenden Wassers und insbesondere die von der ersten Regler-Einheit (4) kommende Wassermenge innerhalb der von den Strömungshindernissen (22) umgrenzten Kreisfläche auf dem Topfboden des Strahlzerlegers (16) auftrifft.

9. Sanitäre Einsetzeinheit nach einem der Ansprüche 6 bis 8, **dadurch gekennzeichnet, dass** die Strömungshindernisse (22) stiftförmig ausgestaltet sind.

10. Sanitäre Einsetzeinheit nach einem der Ansprüche 1 bis 9, **dadurch gekennzeichnet, dass** über den zentralen Umlenkkonus (23) ein zentraler Haltestift (24) vorsteht, an dem sich der Durchflussmengenregler (2) vorzugsweise etwa mittig abstützt.

11. Sanitäre Einsetzeinheit nach einem der Ansprüche 1 bis 10, **dadurch gekennzeichnet, dass** das Reglergehäuse (3) auf einem Ringabsatz (28) des Strahlreglergehäuses (15) abgestützt ist.

12. Sanitäre Einsetzeinheit nach einem der Ansprüche 3 bis 11, **dadurch gekennzeichnet, dass** das Strahlreglergehäuse (15) zweiteilig ausgestaltet ist und dass die zumindest eine, in einem abströmseitigen Gehäuseteil (26) vorgesehene Belüftungsöffnung (20) bis unterhalb der Trennebene zwischen den Gehäuseteilen (25, 26) reicht.

13. Sanitäre Einsetzeinheit nach Anspruch 12 , **dadurch gekennzeichnet, dass** an der auslaufseitigen Stirnfläche des abströmseitigen Gehäuseteiles (26) eine Gitter- oder Netzstruktur (30) vorgesehen ist, die durch sich an Kreuzungsknoten (31) kreuzende und zwischen sich Auslauföffnungen (32) umgrenzende Stege (33) gebildet ist.

14. Sanitäre Einsetzeinheit nach Anspruch 13, **dadurch gekennzeichnet, dass** die Gitter- oder Netzstruktur (30) einstückig an das Gehäuseteil (26) angeformt ist.

15. Sanitäre Einsetzeinheit nach einem der Ansprüche 1 bis 14, **dadurch gekennzeichnet, dass** der Drosselkörper (7) der ersten Regler-Einheit (4) und der Drosselkörper (12) zumindest der benachbarten zweiten Regler-Einheit (9) zu einer Drosselkörper-Einheit (34) vorzugsweise einstückig miteinander verbunden sind.

16. Sanitäre Einsetzeinheit nach einem der Ansprüche 1 bis 15, **dadurch gekennzeichnet, dass** der erste Ringkanal (5) der ersten Regler-Einheit (4) und der zweite Ringkanal (10) der benachbarten zweiten Regler-Einheit (9) konzentrisch zueinander angeordnet sind.

17. Sanitäre Einsetzeinheit nach Anspruch 15 oder 16, **dadurch gekennzeichnet, dass** die Drosselkörper-Einheit (34) einen etwa W-förmigen, Y-förmigen oder gabelförmigen Ringquerschnitt aufweist und dass zwei freie Stegenden dieser Ringquerschnittsform die ringförmigen Drosselkörper (7, 12) bilden.

18. Sanitäre Einsetzeinheit nach einem der Ansprüche 15 bis 17, **dadurch gekennzeichnet, dass** der erste Ringkanal (5) der ersten Regler-Einheit (4) und der zweite Ringkanal (10) der benachbarten zweiten Regler-Einheit (9) durch eine umlaufende Ringwand (35) oder durch eine Ringnut voneinander getrennt sind.

19. Sanitäre Einsetzeinheit nach Anspruch 18, **dadurch gekennzeichnet, dass** die an der zuströmseitigen Stirnfläche des Reglergehäuses (3) vorstehende Ringwand (35) in die zentrale Ausnehmung des W-förmigen Ringquerschnitts der Drosselkörper-Einheit (34) vorsteht.

20. Sanitäre Einsetzeinheit nach Anspruch 18, **dadurch gekennzeichnet, dass** in die an der zuströmseitigen Stirnfläche des Reglergehäuses (3) vorgesehene Ringnut der untere Längssteg des Y-förmigen oder gabelförmigen Ringquerschnitts der Drosselkörper-Einheit vorsteht.

## Claims

1. Sanitary insertion unit (1) having a flow regulator (2), which flow regulator comprises a regulator housing (3), in which regulator housing there is provided a first regulator unit (4), which first regulator unit has a first ring-shaped duct (5), which ring-shaped duct encompasses a core (6) and in which first ring-shaped duct a ring-shaped throttle body (7) produced from elastic material is arranged, which throttle body (7) delimits a control gap between itself and a regulating profiling (8) which is provided on an inside and/or outside channel wall of the first ring-shaped duct (5), the passage cross section of which control gap is modifiable by way of the throttle body (7) which deforms under the pressure difference that forms when a flow passes through, wherein in the core (6) of the first regulator unit (4) there is provided at least one inside second regulator unit (9) which has a second ring-shaped duct (10) with a ring-shaped throttle body (12) produced from elastic material arranged therein, which throttle body (12) delimits a control gap between itself and a regulating profiling (13) of the second ring-shaped duct (10), **characterized in that** the insertion unit (1) has a jet regulator (14), which comprises in its jet regulator housing (15) a pot-shaped jet splitter (16), the pot base of which forms an impingement surface (17) which diverts the water coming from the regulator units (4, 9) outwardly transversely with respect to the jet regulator longitudinal axis toward passage openings (18) in the circumferential wall of the pot-shaped jet splitter (16), wherein a central diverting cone (23) is provided on the pot base of the jet splitter (16), and the at least one second ring-shaped duct (10) of the flow regulator (2) is aligned such that at least a partial quantity of the water emerging there strikes the diverting cone (23).

2. Sanitary insertion unit according to Claim 1, **characterized in that** the jet regulator (14) is realized as an aerated jet regulator.

3. Sanitary insertion unit according to Claim 2, **characterized in that** the jet regulator (14) has at least one aeration opening (20) which extends through the jet regulator housing (15).

4. Sanitary insertion unit according to one of Claims 1 to 3, **characterized in that** a ring-shaped zone (19), which tapers increasingly in the direction of flow, is provided in the region of the outflow-side mouths of the passage openings (18), between the outer circumferential wall of the jet splitter (16) and the adjacent housing inner circumference of the jet regulator housing (15).

5. Sanitary insertion unit according to Claim 4, **characterized in that** at least one aeration opening (20) is provided in the housing wall of the jet regulator housing (15) in the region of the ring-shaped zone (19) and in particular beneath the ring-shaped zone (19) in the direction of flow of the fluid flowing through the jet regulator (14).

6. Sanitary insertion unit according to one of Claims 1 to 5, **characterized in that** a flow obstruction (22) is provided upstream of at least one of the passage openings (18) in the direction of flow.

7. Sanitary insertion unit according to Claim 6, **characterized in that** at least one flow obstruction (22) protrudes on the inside of the pot base of the jet splitter (16) in the opposite direction to the direction of flow.

8. Sanitary insertion unit according to Claim 6 or 7, **characterized in that** the flow obstructions (22) are arranged such that at least a partial quantity of the water coming from the flow regulator (2) and in particular the water quantity coming from the first regulator unit (4) strikes the pot base of the jet splitter (16) inside the circular area bordered by the flow obstructions (22).

9. Sanitary insertion unit according to one of Claims 6 to 8, **characterized in that** the flow obstructions (22) are of pin-like form.

10. Sanitary insertion unit according to one of Claims 1 to 9, **characterized in that** a central retaining pin (24), against which the flow regulator (2) is supported preferably approximately centrally, protrudes above the central diverting cone (23).

11. Sanitary insertion unit according to one of Claims 1 to 10, **characterized in that** the regulator housing (3) is supported on a ring-shaped shoulder (28) of the jet regulator housing (15).

12. Sanitary insertion unit according to one of Claims 3 to 11, **characterized in that** the jet regulator housing (15) is of two-part form and **in that** the at least one aeration opening (20) provided in an outflow-side housing part (26) extends as far as below the parting plane between the housing parts (25, 26).

13. Sanitary insertion unit according to Claim 12, **characterized in that** a grid structure or mesh structure (30) formed by webs (33) which cross at crossing nodes (31) and which between them border outlet openings (32) is provided on the outlet-side end face of the outflow-side housing part (26).

14. Sanitary insertion unit according to Claim 13, **characterized in that** the grid structure or mesh structure (30) is integrally formed in unipartite fashion on the housing part (26).

15. Sanitary insertion unit according to one of Claims 1 to 14, **characterized in that** the throttle body (7) of the first regulator unit (4) and the throttle body (12) of at least the adjacent second regulator unit (9) are preferably connected to one another in unipartite fashion to form a throttle body unit (34).

16. Sanitary insertion unit according to one of Claims 1 to 15, **characterized in that** the first ring-shaped duct (5) of the first regulator unit (4) and the second ring-shaped duct (10) of the adjacent second regulator unit (9) are arranged concentrically with respect to one another.

17. Sanitary insertion unit according to Claim 15 or 16, **characterized in that** the throttle body unit (34) comprises an approximately W-shaped, Y-shaped or fork-shaped ring cross section and **in that** two free web ends of said ring cross section form the ring-shaped throttle bodies (7, 12).

18. Sanitary insertion unit according to one of Claims 15 to 17, **characterized in that** the first ring-shaped duct (5) of the first regulator unit (4) and the second ring-shaped duct (10) of the adjacent second regulator unit (9) are separated from one another by an encircling ring-shaped wall (35) or by a ring-shaped groove.

19. Sanitary insertion unit according to Claim 18, **characterized in that** the ring-shaped wall (35) which protrudes on the inflow-side end face of the regulator housing (3) protrudes into the central recess of the W-shaped ring cross section of the throttle body unit (34).

20. Sanitary insertion unit according to Claim 18, **characterized in that** the lower longitudinal web of the Y-shaped or fork-shaped ring cross section of the throttle body unit protrudes into the ring-shaped groove provided on the inflow-side end face of the regulator housing (3).

## Revendications

1. Unité d'insertion sanitaire (1) avec un régulateur de débit (2), qui présente un boîtier de régulateur (3), dans lequel il est prévu une première unité de régulateur (4), qui comporte un premier canal annulaire (5) qui entoure un coeur (6) et dans lequel est disposé un corps d'étranglement annulaire (7) en matériau élastique, corps d'étranglement (7) qui limite entre lui-même et un profilage de régulation (8) prévu sur une paroi de canal intérieure et/ou extérieure du premier canal annulaire (5) une fente de commande, dont la section transversale de passage peut être modifiée par le corps d'étranglement (7) se déformant sous la différence de pression qui apparaît lors de l'écoulement, dans laquelle il est prévu dans le coeur (6) de la première unité de régulateur (4) au moins une deuxième unité de régulateur intérieure (9), qui comporte un deuxième canal annulaire (10) avec un corps d'étranglement annulaire (12) disposé dans celui-ci, corps d'étranglement (12) qui limite entre lui-même et un profilage de régulation (13) du deuxième canal annulaire (10) une fente de commande,
**caractérisée en ce que** l'unité d'insertion (1) comporte un régulateur de jet (14), qui présente dans son boîtier de régulateur de jet (15) un brise-jet en forme de godet (16), dont le fond de godet forme une face d'impact (17), qui dévie l'eau venant des unités de régulateur (4, 9) transversalement à l'axe longitudinal du régulateur de jet en direction de l'extérieur vers des ouvertures de passage (18) dans la paroi périphérique du brise-jet en forme de godet (16), dans laquelle il est prévu un cône de déviation central (23) sur le fond du godet du brise-jet (16), et ledit au moins un deuxième canal annulaire (10) du régulateur de débit (2) est orienté de telle manière qu'au moins un débit partiel de l'eau qui y sort arrive sur le cône de déviation (23).

2. Unité d'insertion sanitaire selon la revendication 1, **caractérisée en ce que** le régulateur de jet (14) est constitué par un régulateur de jet aéré.

3. Unité d'insertion sanitaire selon la revendication 2, **caractérisée en ce que** le régulateur de jet (14) présente au moins une ouverture d'aération (20), qui traverse le boîtier de régulateur de jet (15).

4. Unité d'insertion sanitaire selon l'une quelconque des revendications 1 à 3, **caractérisée en ce qu'**il est prévu entre la paroi périphérique extérieure du brise-jet (16) et la proche périphérie intérieure de boîtier du boîtier de régulateur de jet (15), dans la région des embouchures aval des ouvertures de passage (18), une zone annulaire (19) qui se rétrécit de plus en plus dans la direction d'écoulement.

5. Unité d'insertion sanitaire selon la revendication 4, **caractérisée en ce qu'**il est prévu dans la région de la zone annulaire (19) et en particulier dans la direction d'écoulement du fluide traversant le régulateur de jet (14) en dessous de la zone annulaire (19), au moins une ouverture d'aération (20) dans la paroi de boîtier du boîtier de régulateur de jet (15).

6. Unité d'insertion sanitaire selon l'une quelconque des revendications 1 à 5, **caractérisée en ce qu'**il est prévu un obstacle à l'écoulement (22) avant au moins une des ouvertures de passage (18) dans la direction d'écoulement.

7. Unité d'insertion sanitaire selon la revendication 6, **caractérisée en ce qu'**au moins un obstacle à l'écoulement (22) est saillant contre la direction d'écoulement sur le côté intérieur du fond de godet du brise-jet (16).

8. Unité d'insertion sanitaire selon une revendication 6 ou 7, **caractérisée en ce que** les obstacles à l'écoulement (22) sont disposés de telle manière qu'au moins un débit partiel de l'eau venant du régulateur de débit (2) et en particulier le débit d'eau venant de la première unité de régulateur (4) arrive sur le fond de godet du brise-jet (16) à l'intérieur de la face circulaire limitée par les obstacles à l'écoulement (22).

9. Unité d'insertion sanitaire selon l'une quelconque des revendications 6 à 8, **caractérisée en ce que** les obstacles à l'écoulement (22) sont réalisés en forme de tiges.

10. Unité d'insertion sanitaire selon l'une quelconque des revendications 1 à 9, **caractérisée en ce qu'**une tige de maintien centrale (24) est saillante au-dessus du cône de déviation central (23), sur laquelle le régulateur de débit (2) s'appuie de préférence environ au centre.

11. Unité d'insertion sanitaire selon l'une quelconque des revendications 1 à 10, **caractérisée en ce que** le boîtier de régulateur (3) est appuyé sur un épaulement annulaire (28) du boîtier de régulateur de jet (15).

12. Unité d'insertion sanitaire selon l'une quelconque des revendications 3 à 11, **caractérisée en ce que** le boîtier de régulateur de jet (15) est réalisé en deux parties et **en ce que** ladite au moins une ouverture d'aération (20) prévue dans une partie de boîtier aval (26) s'étend jusqu'en dessous du plan de séparation entre les parties de boîtier (25, 26).

13. Unité d'insertion sanitaire selon la revendication 12, **caractérisée en ce qu'**il est prévu sur la face frontale de sortie de la partie de boîtier aval (26) une structure de grille ou de treillis (30), qui est formée par des nervures (33) qui se croisent en des noeuds de croisement (31) et qui définissent entre elles des ouvertures de sortie (32).

14. Unité d'insertion sanitaire selon la revendication 13, **caractérisée en ce que** la structure de grille ou de treillis (30) est formée d'une pièce sur la partie de boîtier (26).

15. Unité d'insertion sanitaire selon l'une quelconque des revendications 1 à 14, **caractérisée en ce que** le corps d'étranglement (7) de la première unité de régulateur (4) et le corps d'étranglement (12) au moins de la deuxième unité de régulateur voisine (9) sont réunis l'un à l'autre, de préférence en une seule pièce, en une unité de corps d'étranglement (34).

16. Unité d'insertion sanitaire selon l'une quelconque des revendications 1 à 15, **caractérisée en ce que** le premier canal annulaire (5) de la première unité de régulateur (4) et le deuxième canal annulaire (10) de la deuxième unité de régulateur voisine (9) sont disposés de façon concentrique l'un à l'autre.

17. Unité d'insertion sanitaire selon une revendication 15 ou 16, **caractérisée en ce que** l'unité de corps d'étranglement (34) présente une section transversale annulaire sensiblement en forme de W, en forme d'Y ou en forme de fourche, et **en ce que** deux extrémités de nervure libres de cette forme de section transversale annulaire forment les corps d'étranglement annulaires (7, 12).

18. Unité d'insertion sanitaire selon l'une quelconque des revendications 15 à 17, **caractérisée en ce que** le premier canal annulaire (5) de la première unité de régulateur (4) et le deuxième canal annulaire (10) de la deuxième unité de régulateur voisine (9) sont séparés l'un de l'autre par une paroi annulaire périphérique (35) ou par une rainure annulaire.

19. Unité d'insertion sanitaire selon la revendication 18, **caractérisée en ce que** la paroi annulaire (35) saillante sur la face frontale amont du boîtier de régulateur (3) est saillante dans l'évidement central de la section transversale annulaire en forme de W de l'unité de corps d'étranglement (34).

20. Unité d'insertion sanitaire selon la revendication 18, **caractérisée en ce que** la nervure longitudinale inférieure de la section transversale annulaire en forme d'Y ou en forme de fourche de l'unité de corps d'étranglement est saillante dans la rainure annulaire prévue sur la face frontale amont du boîtier de régulateur (3).
